**Europäisches Patentamt**

**European Patent Office**

**Office européen des brevets**

(19)

(11) Veröffentlichungsnummer : **0 373 346 B1**

## (12) EUROPÄISCHE PATENTSCHRIFT

(45) Veröffentlichungstag der Patentschrift :
**10.06.92 Patentblatt 92/24**

(51) Int. Cl.$^5$ : **B60T 8/34,** B60T 8/26

(21) Anmeldenummer : **89120371.3**

(22) Anmeldetag : **03.11.89**

(54) **Bremsanlage mit Antiblockiersystem für ein Kraftfahrzeug.**

(30) Priorität : **10.12.88 DE 3841738**

(43) Veröffentlichungstag der Anmeldung :
**20.06.90 Patentblatt 90/25**

(45) Bekanntmachung des Hinweises auf die
Patenterteilung :
**10.06.92 Patentblatt 92/24**

(84) Benannte Vertragsstaaten :
**DE FR GB IT**

(56) Entgegenhaltungen :
**DE-A- 2 644 615**
**DE-A- 3 144 505**
**DE-A- 3 538 330**

(73) Patentinhaber : **ROBERT BOSCH GMBH**
**Postfach 30 02 20**
**W-7000 Stuttgart 30 (DE)**

(72) Erfinder : **Friedow, Michael**
**Uracher Weg 9,**
**W-7146 Tamm (DE)**
Erfinder : **Busch, Gerd**
**Karlsbader Str. 53,**
**W-7016 Gerlingen (DE)**

EP 0 373 346 B1

## Beschreibung

Stand der Technik

Die Erfindung betrifft eine Bremsanlage mit Antiblockiersystem für ein Kraftfahrzeug gemäß dem Oberbegriff des Anspruchs 1.

Bremsanlagen für Kraftfahrzeuge enthalten je eine an den vier Rädern angebrachte Bremseinrichtung mit Bremsdruckleitungen zu diesen Bremseinrichtungen. Zur Erzeugung des Bremsdrucks und damit der Bremswirkung wird mit Hilfe eines Fußpedals ein Hauptbremszylinder betätigt. Bei modernen Fahrzeugen sind zusätzlich Antiblockiersysteme eingebaut, mit denen im Antiblockierbetrieb ebenfalls ein Bremsdruck für eine automatisch angepaßte Bremsung erzeugt wird. Dazu sind an den Rädern Sensoren zum Erkennen einer Blockiergefahr angebracht, die über eine Steuereinheit beispielsweise auf einen Motor einer Rückförderpumpe und Magnetventile wirken und in den Bremsleitungen geeignete Druckänderungen gegenüber dem Druck des Hauptbremszylinders erzeugen.

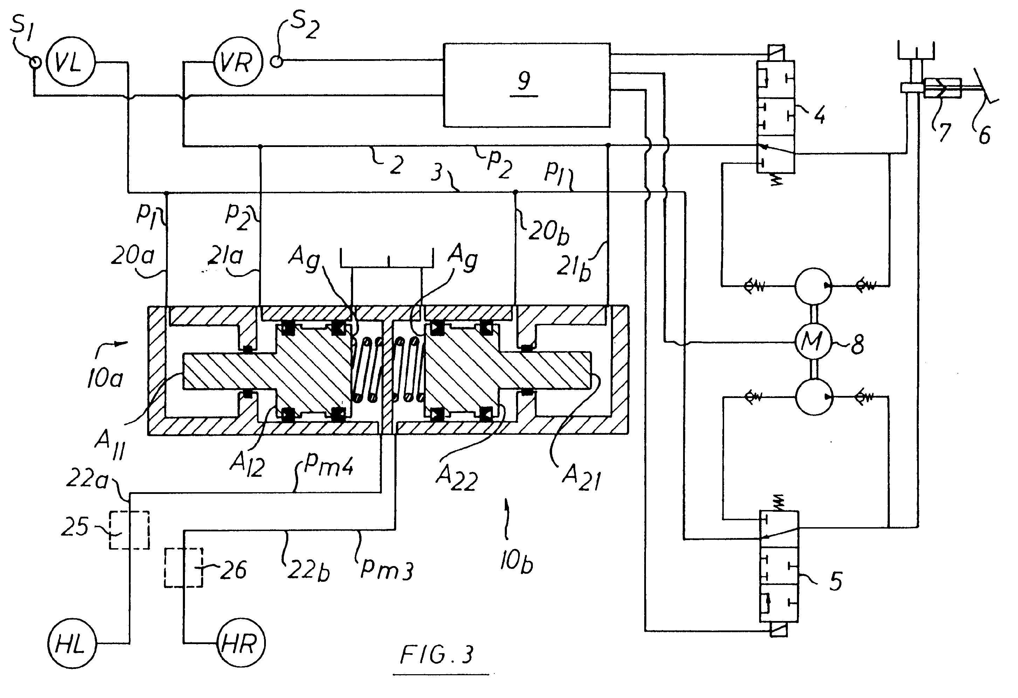

Es ist bekannt, aus Sicherheitsgründen mehrere Bremskreise zu verwenden. Oft wird eine Aufteilung der beiden Kreise auf Vorder- und Hinterachse gewählt (Bremsenhandbuch, 8. Neuauflage, Bartsch Verlag, Ottobrunn bei München, Seite 53, Fig. 3), wobei beim Ausfall des Vorderachskreises die Hinterachse noch bremsfähig ist und umgekehrt. Es ist auch eine diagonale Aufteilung bekannt, wobei ein Vorderrad und ein gegenüberliegendes Hinterrad jeweils in einem Kreis zusammengefaßt sind.

Es ist weiter bekannt (EP 0 203 778 A2), eine Aufteilung dergestalt vorzunehmen, daß die Bremsleitung zu einem Vorderrad jeweils mit einem Bremszylinder eines Hinterrades Verbindung hat. An jedem Hinterrad werden somit die Drücke jeder Vorderradbremse wirksam, was einer mechanischen Addition von Bremskräften mittels der Bremstrommel entspricht. Beim Ausfall eines Bremskreises fällt damit nur eine Vorderradbremse ganz aus, während ein Vorderrad und beide Hinterräder noch bremsfähig bleiben.

Bei der Verwendung eines Antiblockiersystems ist es allgemein bekannt, für die beste Wirkung an einem Fahrzeug mit vier Rädern an jedem Rad einen Sensor anzubringen und auch an jedem Rad korrigierend zur Verhinderung des Blockierzustandes einzugreifen. Dazu sind vier weitgehend unabhängige Systeme mit je einem Sensor, einem Modulator und einer Ansteuerungseinheit erforderlich, um jedes Rad unabhängig steuern zu können. Es handelt sich dabei um ein sogenanntes Vierkanalsystem, da die verwendete elektronische Regelung vier Kanäle zur Steuerung der Modulatoren aufweisen muß. Ein solches System arbeitet ersichtlich effektiv, ist aber durch die Vielzahl der unabhängigen Baueinheiten teuer.

Um hier Kosten zu sparen, ist es ebenfalls bekannt (EP 0 203 778 A2), an der Hinterachse mit nur einem Modulator steuernd einzugreifen. Jedoch sind auch hier vier Sensoren und ein vierkanaliger Regler erforderlich, so daß lediglich ein Modulator eingespart wird und das System insgesamt ebenfalls relativ teuer ist.

Ein weiteres System, mit dem gegenüber einem reinen Vierkanalsystem Kosten eingespart werden können, ist ein diagonal arbeitendes System, mit dem die Vorder- und Hinterradbremsen zweier Räder diagonal verbunden sind. Hierbei sind nur zwei Sensoren, jeweils ein Sensor an jedem Vorderrad und zwei Modulatoren erforderlich. Auch der Regler kann hier zweikanalig ausgeführt sein, so daß dieses System insgesamt preiswerter ist.

Die beiden vorstehend genannten, preiswerteren Systeme arbeiten weitgehend zufriedenstellend, wenn alle Räder auf einer Fläche mit gleichem Reibungskoeffizienten laufen. Wenn die beiden gegenüberliegenden Räderpaare jedoch auf Flächen mit unterschiedlichem Reibungskoeffizient laufen ($\mu$-Split) kann es zu gefährlichen Fahr- und Bremszuständen kommen. Beispielsweise wird bei einem Diagonalsystem der vorstehend genannten Art das Hinterrad entgegen der gewünschten Wirkung auf der Fläche mit einem geringen Reibungskoeffizient abgebremst und beim Hinterrad auf der Fläche mit einem hohen Reibungskoeffizient die Bremswirkung reduziert.

Um hier eine Abhilfe zu schaffen, wäre es grundsätzlich möglich, ein System nicht diagonal, sondern seitenweise aufzuteilen. Beim Ausfall eines Bremskreises wäre aber eine solche Seitenaufteilung äußerst ungünstig und ein dann nur einseitig gebremstes Fahrzeug wäre praktisch nicht kontrollierbar.

Die im Zusammenhang mit der EP 0 203 778 A2 vorgeschlagene Lösung, die Drücke jeder Vorderradbremse an jedem Hinterrad wirksam werden zu lassen, reduziert die vorstehend genannten negativen Effekte in der Funktion. Ein solches System erfordert jedoch zwei Bremszylinder an jedem Hinterrad, was zu teueren und aufwendigen Sonderkonstruktionen führt.

Vorteile der Erfindung

Mit einer Bremsanlage mit Antiblockiersystem für ein Kraftfahrzeug nach den Merkmalen des Anspruchs 1 wird vorteilhaft die Bremswirkung auf $\mu$-Split und Schachbrett erhöht und durch eine geeignete Nachführung der Hinterräder über wenigstens eine Stufenkolben-Zylinderanordnung eine gute Stabilität gewährleistet.

Die Drücke, die als Vordrücke für jeden Kreis anstehen, werden durch ein 3/3-Magnetventil moduliert und direkt den entsprechenden Vorderradbremszylindern zugeführt, wobei nur ein Magnetventil pro Kreis verwendet wird und nur ein Sensor am zugeordneten Vorderrad angeordnet ist. Damit wird vorteilhaft diesem Vorderrad der jeweils maximal mögliche, dem jeweilig vorhandenen Reibwert entsprechende Bremsdruck zugeführt. In einer ersten Ausführungsform werden beide Hinterräder über nur eine Stufenkolben-Zylinderanordnung mit einem gemittelten Druck nachgeführt.

Obwohl die Anordnung von der grundsätzlichen hydraulischen und elektronischen Struktur her als Zweikanalsystem ausgeführt ist, ergibt sich ein hydraulisches Dreikanalsystem, wobei ein Kanal abhängig von den zwei anderen ist. Damit ergeben sich bezüglich der Sicherheit Vorteile, da bei einer Leckage an einem Vorderrad die restlichen drei Räder gebremst werden können. Bei einem Ausfall der Hinterradbremsen bleibt die Bremsfähigkeit an beiden Vorderrädern erhalten.

Bei Fahrzeugen mit Diagonalkreisbremssystem und einem zweikanaligen Antiblockiersystem, bei denen ausschließlich die Vorderradgeschwindigkeiten sensiert werden, treten bei μ-Split beträchtliche Bremswegverlängerungen gegenüber einem bekannten Vierkanalsystem auf, da das Hinterrad auf dem Belag mit hohem μ-Wert stark unterbremst ist. Dieser Nachteil wird mit dem vorliegenden System vermieden und vorteilhaft ein zusätzliches Sicherheitspotential bereitgestellt.

Erhebliche Vorteile werden mit einer Bremsanlage zusätzlich erzielt, wenn gemäß Anspruch 4 zwei Stufenkolben-Zylinderanordnungen vorgesehen sind. Dabei kann der Grad der Beeinflussung eines Hinterrads durch das auf derselben Seite befindliche Vorderrad bzw. auch durch das diagonal dazu befindliche Vorderrad annähernd beliebig gewählt werden. Die Bremskreisaufteilung ist dabei weder rein diagonal noch rein seitenweise, sondern eine spezifische Mischform. Die diagonale Komponente wird aus Sicherheitsgründen beibehalten, da bei einem Kreisausfall eine reine seitenweise Bremsaufteilung kritisch wäre. Die seitenweise Komponente verbessert aber deutlich die Bremsleistungen auf μ-Split und bei Kurvenbremsungen. Durch die Möglichkeit einer geeigneten Dimensionierung und Aufteilung zwischen einer seitenweisen und Diagonalverteilung wird die Leistungsfähigkeit und die Sicherheit des vorliegenden Systems gegenüber einem Zweikanalsystem mit Diagonalkreisaufteilung wesentlich erhöht ohne unbefriedigende Stabilitätsverluste hinnehmen zu müssen.

Zeichnung

Zwei Ausführungsbeispiele der Erfindung sind in der Zeichnung dargestellt und werden in der nachfolgenden Beschreibung näher erläutert.

Es zeigen

Figur 1 eine schematische Darstellung einer ersten Ausführungsform einer Bremsanlage mit Antiblockiersystem für ein Kraftfahrzeug mit einer Stufenkolben-Zylinderanordnung,

Figur 2 eine stark vereinfachte Darstellung einer zweiten Ausführungsform einer Bremsanlage mit Antiblockiersystem für ein Kraftfahrzeug mit zwei Stufenkolben-Zylinderanordnungen zur Erläuterung der Kreisaufteilungen,

Figur 3 eine genauere Darstellung der Bremsanlage nach Figur 2 mit weiteren erforderlichen Komponenten.

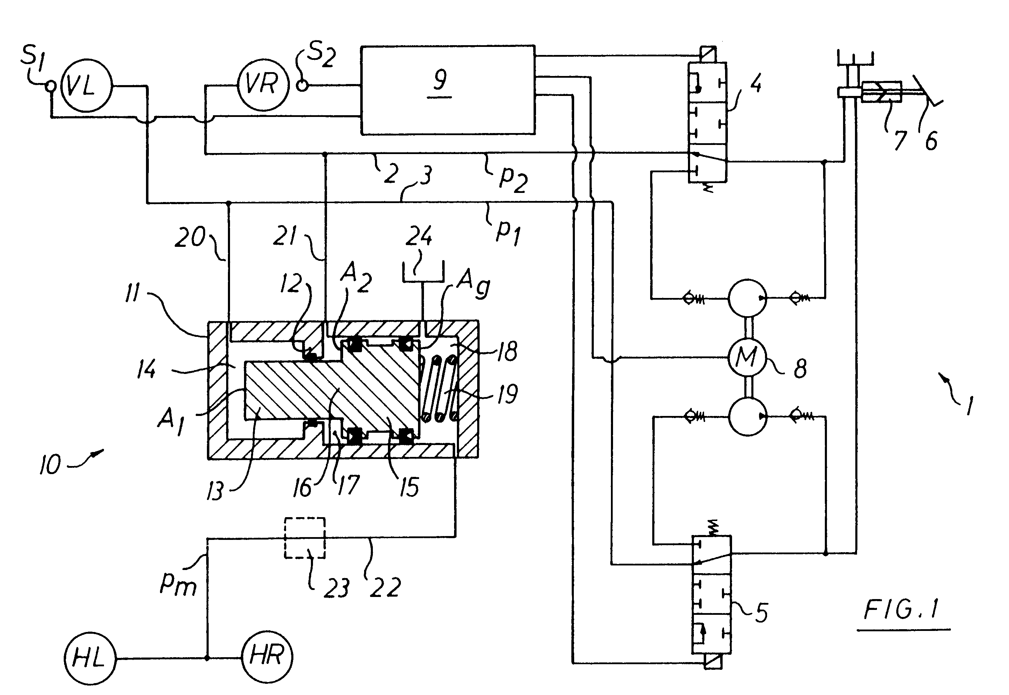

Eine erste Ausführungsform einer Bremsanlage nach Figur 1 besteht aus Bremseinrichtungen an den vier Fahrzeugrädern, beispielsweise Bremstrommeln oder Scheibenbremsen, die entspechend ihrer Lage am vorderen linken, vorderen rechten, hinteren linken und hinteren rechten Rad mit VL, VR, HL und HR bezeichnet sind.

Zu den Bremseinrichtungen VL und VR an den Vorderrädern führen Bremsleitungen 2, 3, die an 3/3-Magnetventile 4, 5 angeschlossen sind.

Der Bremsdruck kann in an sich bekannter Weise sowohl über ein Fußpedal 6 mit dahinterliegendem Druckzylinder 7 und alternativ im ABS-Fall über einen Motor 8 erzeugt werden. In der gezeichneten Ventilstellung ist der mit dem Fußpedal 6 erzeugte Druck direkt auf die Bremsleitungen 2, 3 zu den Vorderrädern durchgeschaltet.

An den Vorderrädern sind Sensoren $S_1$ und $S_2$ angebracht, die einen Blockierzustand dieser Räder erkennen. Die Sensorsignale sind einer Steuereinheit 9 zugeführt, die in Abhängigkeit dieser beiden Signale, d.h. zweikanalig, die Magnetventile 4 und 5 sowie den Motor 8 ansteuert und dabei insbesondere die Drücke durch die Magnetventile moduliert.

Um auch die Hinterräder zu bremsen bzw. die Bremseinrichtungen HL und HR mit Bremsdruck zu versorgen, ist eine Stufenkolben-Zylinderanordnung 10 vorgesehen. Diese Stufenkolben-Zylinderanordnung 10 besteht aus einem Zylindergehäuse 11, das aus zwei durch eine Wand 12 geteilte Zylinderkammern besteht.

In die erste Zylinderkammer ragt ein erster Kolbenteil 13 mit einer wirksamen Kolbenfläche $A_1$, wodurch ein erster Zylinderraum 14 definiert ist. Der ersten Kolbenteil 13 ist in der Wand 12 dicht und verschiebbar gehalten.

In der zweiten Zylinderkammer liegt ein zweites Kolbenteil 15, das gegenüber dem ersten Kolbenteil stufenförmig zu einem größeren Durchmesser vergrößert ist. An der stufenförmigen Ausbildung ergibt sich eine ringförmige, wirksame Kolbenfläche $A_2$. Das erste und zweite Kolbenteil 13 und 15 bilden den Stufenkolben 16. Zwischen der Wand 12 und der Kolbenfläche $A_2$ ist ein zweiter Zylinderraum 17 gebildet. Auch der zweite Kolbenteil 15 ist dicht und verschiebbar im Zylindergehäuse 11 gelagert.

Zwischen der Stirnwand des zweiten Kolbenteils 15 mit der wirksamen Kolbenfläche $A_g$ und dem Gehäuse 11 ist ein dritter Zylinderraum 18 gebildet, in dem auch eine Rückstellfeder 19 angeordnet ist.

Mit dem ersten Zylinderraum 14 und dem zweiten Zylinderraum 17 sind über Verzweigungsleitungen 20, 21 jeweils die Bremsleitungen 2 und 3 zu den Vorderrädern verbunden.

Über eine gemeinsame Bremsleitung 22 sind die Bremseinrichtungen an den Hinterrädern HL und HR mit dem dritten Zylinderraum verbunden. In der Bremsleitung 22 kann der Bremsdruck noch über einen (strichliert eingezeichneten) Druckminderer 23 geeignet beeinflußt werden.

Unmittelbar an der rückgestellten Kante der Kolbenfläche $A_g$ ist ein Vorratsgefäß 24 für Bremsflüssigkeit angeschlossen, wobei dieser Anschluß bei einem ausgelenkten Stufenkolben 16 abgedeckt und abgedichtet wird.

Die dargestellte Anordnung hat folgende Funktion: Beim Eingreifen des Antiblockiersystems werden über die Sensoren $S_1$ und $S_2$ nur die Vorderräder sensiert. Die Drücke, die als Bremsvordrücke für jeden Kreis anstehen, werden durch die Magnetventile 4, 5 moduliert und direkt den entsprechenden Vorderradbremseinrichtungen VL, VR zugeführt. Die beiden Hinterräder bzw. Hinterradbremseinrichtungen HL und HR werden über einen Stufenkolben 16 mit einem gemittelten Bremsdruck nachgeführt. In einer vorteilhaften Ausführung werden aufgrund der erforderlichen Bremssymmetrien die wirksamen Kolbenflächen $A_1$ und $A_2$ gleich groß gemacht. Allgemein ergibt sich folgender Zusammenhang:

$$p_1 \cdot A_1 \; + \; p_2 \cdot A_2 \; = \; p_m \cdot A_g \text{ für } A_1 \; = \; A_2 \quad (1)$$
$$A_1 \cdot (p_1 \; + \; p_2) \; = \; p_m \cdot A_g \text{ wobei } A_g \; = \; 2\,A_1 \quad (2)$$
$$p_m \; = \; \frac{p_1 \; + \; p_2}{2} \quad (3)$$

Dabei bedeuten: $p_1$ der Bremsdruck zum linken Vorderrad, $p_2$ der Bremsdruck zum rechten Vorderrad; $A_1$, $A_2$ und $A_g$ die am Stufenkolben 16 bezeichneten Kolbenflächen und $P_m$ der gemittelte Bremsdruck für die Hinterräder.

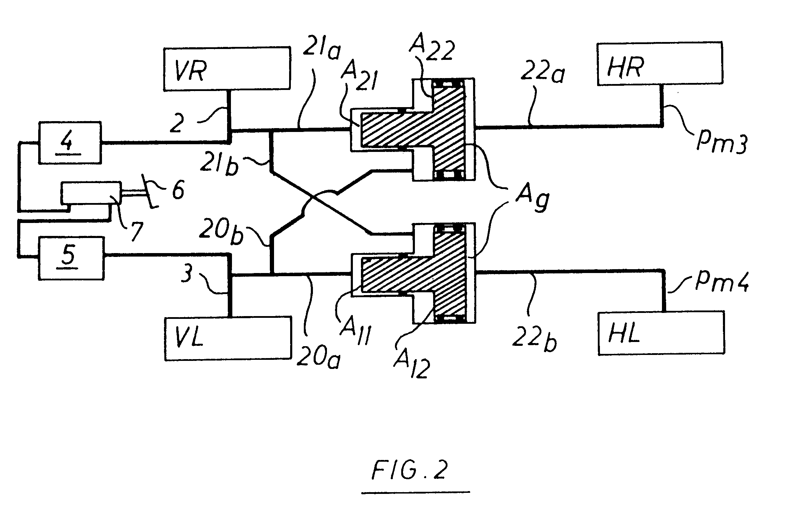

Anhand der Figuren 2 und 3 wird eine zweite Ausführungsform der Erfindung näher erläutert. Hierbei sind zwei Stufenkolbenanordnungen verwendet. Die anderen Komponenten entsprechen der ersten Ausführungsform nach Figur 1 und sind daher mit den gleichen Bezugzeichen bezeichnet.

Die beiden Stufenkolben-Zylinderanordnungen entsprechen in ihrem Aufbau der Stufenkolben-Zylinderanordnung 10 aus Figur 1. In Figur 2 sind die beiden Stufenkolben-Zylinderanordnungen zur besseren Verdeutlichung der Zusammenschaltung nebeneinander gezeichnet und in Figur 3 als konkrete Einheit dargestellt.

Wie aus Figur 3 zu ersehen ist, entspricht die Anordnung der Sensoren $S_1$ und $S_2$, die Bremsdruckerzeugung und die Anordnung der Magnetventile 4 und 5 sowie deren Ansteuerung über die Steuereinheit 9 genau der ersten Ausführungsform nach Figur 1. Es wird somit auch hier den Vorderrädern der jeweils maximal mögliche Bremsdruck entsprechend dem jeweilig vorhandenen Reibwert zugeführt. Der Bremsdruck für das linke Vorderrad ist hier ebenfalls mit $p_1$ und für das rechte Vorderrad mit $p_2$ bezeichnet.

Von den entsprechenden Bremsdruckleitungen 2 und 3 zweigen in der zweiten Ausführungsform aber jeweils zwei Verbindungsleitungen 20a und 20b bzw. 21a und 21b ab. Die den Bremsdruck $p_1$ führende Leitung 3 ist über die Leitung 20a mit dem ersten Zylinderraum der ersten Stufenkolben-Zylinderanordnung 10a und über die Leitung 20a mit dem zweiten Zylinderraum der zweiten Stufenkolben-Zylinderanordnung 10b verbunden. Entsprechend ist die den Bremsdruck $p_2$ führende Leitung $p_2$ über die Leitung 21b mit dem ersten Zylinderraum der zweiten Stufenkolben-Zylinderanordnung 10b und über die Leitung 21a mit dem zweiten Zylinderraum der ersten Stufenkolben-Zylinderanordnung 10a verbunden. Die wirksamen Kolbenflächen sind für die erste Stufenkolben-Zylinderanordnung 10a mit $A_{11}$ und $A_{12}$ und entsprechend für die zweite Stufenkolben-Zylinderanordnung 10b mit $A_{21}$ und $A_{22}$ bezeichnet. Die Bezeichnung für die große Stirnfläche des Stufenkolbens im dritten Zylinderraum ist für beide Stufenkolben-Zylinderanordnungen mit $A_g$ angegeben.

Vom dritten Zylinderraum der ersten Stufenkolben-Zylinderanordnung 10a führt eine Bremsleitung 22a zur Bremseinrichtung am hinteren linken Fahrzeugrad HL. Vom dritten Zylinderraum der zweiten Stufenkolben-Zylinderanordnung 10b führt eine Bremsleitung 22b zu der Bremseinrichtung am hinteren rechten Fahrzeugrad HR. In den Leitungen 22a und 22b können noch Druckminderer 25, 26 zur Beeinflussung der Bremsdrücke angeordnet sein.

Die in den Leitungen 22a und 22b auftretenden Drücke sind mit $p_{m4}$ bzw. $p_{m3}$ bezeichnet.

Aufgrund der dargestellten Kolbenanordnungen ergibt sich für die zweite Ausführungsform folgende Beziehung:

$$A_g \, p_{m3} = p_1 A_{22} + p_2 A_{21} \quad (1)$$
$$A_g \, p_{m4} = p_1 A_{11} + p_2 A_{12} \quad (2)$$

Dies ergibt vier getrennte hydraulische Kreise. Der Druck $p_{mx}$ an der Hinterachse kann aufgrund verschiedener Flächenverhältnisse entsprechend Gleichung (1) und (2) erzeugt werden.

Für die Spezialfälle

$$A_{21} = A_{11} = 0$$

würde sich eine Diagonalaufteilung, für

$$A_{22} = A_{12} = 0$$

eine seitenweise Aufteilung ergeben.

Bsp.

$$A_{11} = 2 A_{12} \quad (3)$$
$$A_{21} = 2 A_{22} \quad (4)$$

(3) und (4) in (1) und (2) eingesetzt

$$p_{m3} = \frac{A_{21}}{A_g} (1/2 \, p_1 + p_2) \quad (5)$$

$$p_{m4} = \frac{A_{11}}{A_g} (p_1 + 1/2 \, p_2) \quad (6)$$

Weiter gelten die geometrischen Beziehungen

$$A_g = A_{11} + A_{12} \quad (7a)$$
$$A_g = A_{21} + A_{22} \quad (7b)$$

Im Falle einer Geradeausbremsung auf homogener Oberfläche wird

$$p_1 = p_2 = p \quad (8)$$

sein und somit die Hinterraddrücke $p_{m3}$ und $p_{m4}$ mit (3), (4) und (7a), (7b) sowie (8)

$$p_{m3} = p_{m4} = p.$$

Sind jedoch die Drücke $p_1$ und $p_2$ verschieden

$$p_1 \neq p_2$$

so ergibt sich für die Hinterraddrücke $p_{m3}$ und $p_{m4}$ mit (3) und (4)

$$p_{m3} = 2/3 \, (1/2 \, p_1 + p_2) \quad (9)$$
$$p_{m4} = 2/3 \, (p_1 + 1/2 \, p_2) \quad (10)$$

Somit erfolgt eine Berücksichtigung der verschiedenen μ-Werte bei μ-Split oder die Achslastverteilung beim Bremsen in der Kurve.

Allgemein gilt

$$A_{11} = n \, A_{12} \quad (11)$$
$$A_{21} = n \, A_{22} \quad (12)$$

Damit ergibt sich für (5) und (6) mit (11) und (12)

$$p_{m3} = \frac{n}{n+1} (1/n \, p_1 + p_2)$$

$$p_{m4} = \frac{n}{n+1} (p_1 + 1/n \, p_4)$$

Der Grad der Beeinflussung einer Hinterrades durch das auf der selben Seite befindliche Vorderrad bzw. auch durch das diagonal dazu befindliche Vorderrad kann somit annähernd beliebig gewählt werden.

**Patentansprüche**

1. Bremsanlage für ein Kraftfahrzeug mit vier Rädern, mit den vier Rädern zugeordneten Bremseinrichtungen, mit Bremsdruckleitungen (2,3;22) zu den Bremseinrichtungen, mit einem mit einem Fußpedal (6) zusammenwirkenden Hauptbremszylinder (7) zur Erzeugung von Bremsdrücken in den Bremsdruckleitungen und mit einem Antiblockiersystem (ABS), das zweikanalig aufgebaut ist mit zwei Bremsdruckmodulatoren (4,5) zum Modulieren von Bremsdrücken in den Bremsdruckleitungen und mit zwei den Vorderrädern zugeordneten Sensoren ($S_1, S_2$) zum Erkennen von Blockiergefahr und zum Aktivieren des ABS-Systems zum Modulieren der Bremsdrücke, dadurch gekennzeichnet, daß die Bremsdruckleitungen (2, 3) zu den Vorderrädern (VL, VR) über Verbindungsleitungen (20, 21) Verbindung mit gestuften Bereichen wenigstens einer Stufenkolben-Zylinderanordnung (10) haben und daß die Bremsleitungen (22) für die Hinterräder (HL, HR) an die Stufenkolben-Zylinderanordnung (10) angeschlossen sind, so daß sich für die beiden Hinterradbremseinrichtungen (HL, HR) ein durch die Stufenkolben-Zylinderanordnung (10) gewichteter, von den Bremsdrücken für die Vorderräder (VL, VR) abhängiger Bremsdruck ergibt.

2. Bremsanlage nach Anspruch 1, dadurch gekennzeichnet, daß die Stufenkolben-Zylinderanordnung (10) aus einem Zylindergehäuse (11) besteht, das zwei durch eine Wand (12) geteilte Zylinderkammern aufweist, daß in die erste Zylinderkammer ein erster Kolbenteil (13) bestimmter Kolbenstirnfläche ($A_1$) ragt, wodurch ein erster Zylinderraum (14) gebildet ist und der Stufenkolben (16) in der Wand (12) dicht und verschiebbar gehalten ist, daß sich in der zweiten Zylinderkammer der Stufenkolben (16) stufenförmig zu einem zweiten Kolbenteil (15) vergrößert, so daß zwischen der Wand (12) und der Kolbenstufe ein zweiter Zylinderraum (17) gebildet ist und ein dritter Zylinderraum (18) zwischen dem Gehäuse (11) und der größeren Kolbenstirnfläche ($A_g$) gebildet ist und daß an den ersten und zweiten Zylinderraum (14, 17) die Bremsleitungen (2, 3 bzw. 20, 21) für die Vorderräder (VL, VR) und an den dritten Zylinderraum (18) die Bremsleitungen (22) für die Hinterräder (HL, HR) angeschlossen sind.

3. Bremsanlage nach Anspruch 1 oder 2, dadurch gekennzeichnet, daß die Stufenkolben-Zylinderanordnung (10) wenigstens eine Rückstellfeder (19) für den Stufenkolben (16) enthält und ein Fluidvorratsgefäß (24) für den oder die Hinterradbremskreise (22) enthält.

4. Bremsanlage nach Anspruch 2 oder 3, dadurch gekennzeichnet, daß zwei Stufenkolben-Zylinderanordnungen (10) vorgesehen sind, wobei eine erste Stufenkolben-Zylinderanordnung (10a) über deren dritten Zylinderraum und eine Bremsleitung (22a) mit dem linken Hinterrad (HL) verbunden ist und der erste Zylinderraum mit der Bremsleitung (20a) für das linke Vorderrad (VL) und der zweite Zylinderraum mit der Bremsleitung (21a) für das rechte Vorderrad (VR) verbunden ist und wobei eine zweite Stufenkolben-Zylinderanordnung (10b) über deren dritten Zylinderraum und eine Bremsleitung (22b) mit dem rechten Hinterrad (HR) verbunden ist und der erste Zylinderraum mit der Bremsleitung (21b) für das rechte Vorderrad (VR) und der zweite Zylinderraum mit der Bremsleitung (20b) für das linke Vorderrad (VL) verbunden ist.

5. Bremsanlage nach Anspruch 4, dadurch gekennzeichnet, daß beide Stufenkolben-Zylinderanordnungen (10a, 10b) in einer Einheit zusammengebaut sind.

6. Bremsanlage nach einem der Ansprüche 1 bis 5, dadurch gekennzeichnet, daß die erste, kleinere Kolbenstirnfläche ($A_1$) gleich der durch die Stufe gebildeten, wirksamen Kolbenfläche ($A_2$) ist.

7. Bremsanlage nach einem der Ansprüche 4 bis 6, dadurch gekennzeichnet, daß die entsprechenden Kolbenflächen ($A_{11}, A_{12}, A_g$ und $A_{21}, A_{22}, A_g$) jeder der beiden Stufenkolben-Zylinderanordnungen (10a, 10b) gleich sind.

8. Bremsanlage nach einem der Ansprüche 1 bis 7, dadurch gekennzeichnet, daß in der oder den Hinterradbremsleitungen (22) Bremsdruckminderer (23; 25, 26) angeordnet sind.

## Claims

1. Brake system for a four-wheeled motor vehicle, having braking devices assigned to the four wheels, having brake pressure lines (2, 3, 22) leading to the braking devices, having a master brake cylinder (7), interacting with a pedal (6), for producing brake pressures in the brake pressure lines and having an anti-lock device (ABS), which is of two-channel design, with two brake pressure modulators (4, 5) for modulating brake pressures in the brake pressure lines and with two sensors ($S_1$, $S_2$), assigned to the front wheels, for detecting the risk of locking and for activating the ABS device for the purpose of modulating the brake pressures, characterised in that the brake pressure lines (2, 3) leading to the front wheels (VL, VR) are connected via connecting lines (20, 21) to stepped regions of at least one stepped piston-cylinder arrangement (10) and in that the brake lines (22) for the rear wheels (HL, HR) are connected to the stepped piston-cylinder arrangement (10), with the result that a brake pressure weighted by the stepped piston-cylinder arrangement (10) and dependent on the brake pressures for the front wheels (VL, VR) is obtained for the two rear wheel braking devices (HL, HR).

2. Brake system according to Claim 1, characterised in that the stepped piston-cylinder arrangement (10) comprises a cylinder casing (11) which has two cylinder chambers divided by a wall (12), in that a first piston part (13) of a certain piston end surface area ($A_1$) projects into the first cylinder chamber, a first cylinder space (14) thereby being formed, and the stepped piston (16) is held leak-tightly and displaceably in the wall (12), in that the stepped piston (16) widens step-wise in the second cylinder chamber to form a second piston part (15), a second cylinder space (17) thus being formed between the wall (12) and the piston step, and a third cylinder space (18) is formed between the casing (11) and the larger piston end surface area ($A_g$) and in that the brake lines (2, 3 and 20, 21 respectively) for the front wheels (VL, VR) are connected to the first and second cylinder space (14, 17) and the brake lines (22) for the rear wheels (HL, HR) are connected to the third cylinder space (18).

3. Brake system according to Claim 1 or 2, characterised in that the stepped piston-cylinder arrangement (10) contains at least one return spring (19) for the stepped piston (16) and contains a fluid reservoir (24) for the rear wheel brake circuit(s) (22).

4. Brake system according to Claim 2 or 3, characterised in that two stepped piston-cylinder arrangements (10) are provided, a first stepped piston-cylinder arrangement (10a) being connected via its third cylinder space and a brake line (22a) to the left-hand rear wheel (HL) and the first cylinder space being connected to the brake line (20a) for the left-hand front wheel (VL) and the second cylinder space being connected to the brake line (21a) for the right-hand front wheel (VR), and a second stepped piston-cylinder arrangement (10b) being connected via its third cylinder space and a brake line (22b) to the right-hand rear wheel (HR) and the first cylinder space being connected to the brake line (21b) for the right-hand front wheel (VR) and the second cylinder space being connected to the brake line (20b) for the left-hand front wheel (VL).

5. Brake system according to Claim 4, characterised in that both stepped piston-cylinder arrangements (10a, 10b) are combined in one unit.

6. Brake system according to one of Claims 1 to 5, characterised in that the first, smaller piston end surface area ($A_1$) is equal to the effective piston surface area ($A_2$) formed by the step.

7. Brake system according to one of Claims 4 to 6, characterised in that the corresponding piston surface areas ($A_{11}$, $A_{12}$, $A_g$ and $A_{21}$, $A_{22}$, $A_g$) of each of the two stepped piston-cylinder arrangements ( 10a, 10b ) are equal.

8. Brake system according to one of Claims 1 to 7, characterised in that brake pressure reducers (23; 25, 26) are arranged in the rear wheel brake line(s) (22).

**Revendications**

1. Installation de freins pour un véhicule automobile à quatre roues, comportant des dispositifs de freins associés aux quatre roues, des conduites de pression de freins allant aux dispositifs de freins avec un maître cylindre de frein (7) actionné par une pédale de frein (6), pour créer les pressions de frein dans les conduites de pression de freins et un système anti-blocage (ABS) à deux canaux équipé d'un moduleur de pression de frein (4, 5) pour moduler les pressions de frein dans les conduites de pression de freins et deux capteurs ($S_1$, $S_2$) associés aux roues avant pour déceler un risque de blocage et pour activer le système (ABS) pour moduler les pressions de frein, installation caractérisée en ce que les conduites de pression de freins (2, 3) vers les roues avant (VL, VR) sont reliées par des conduites de liaison (20, 21) aux zones en gradin d'au moins un montage cylindre/piston à gradin (10) et en ce que les conduites de freins (22) des roues arrière (HL, HR) sont reliées au montage cylindre/piston à gradin (10) pour obtenir une pression de frein pour les deux dispositifs de freins de roues arrière (HL, HR) pondérée par le montage cylindre/piston à gradin (10), dépendant des pressions de freins des roues avant (VL, VR).

2. Installation de freins selon la revendication 1, caractérisée en ce que le montage cylindre/piston à gradin (10) se compose d'un boîtier de cylindre (11) à deux chambres de cylindre subdivisées par une cloison (12), en ce qu'une première partie de piston (13), ayant une surface frontale de piston ($A_1$) déterminée, pénètre dans la première chambre de cylindre pour former une première chambre de cylindre (14) et en ce que le piston à gradin (16) est guidé dans la paroi (12) de manière étanche et coulissante, et en ce que dans la seconde chambre du cylindre, le piston à gradin (16) augmente de dimension par un gradin pour former une seconde partie de piston (15) de façon qu'entre la paroi (12) et le gradin de piston il se forme une seconde chambre de cylindre (17) ainsi qu'une troisième chambre de cylindre (18) entre le boîtier (11) et la surface frontale plus grande ($A_g$) du piston, et en ce que la première et la seconde chambre de cylindre (14, 17) sont reliées aux conduites de freins (2, 3 ; 20, 21) des roues avant (VL, VR) et la troisième chambre de cylindre (18) est reliée aux conduites de freins (22) des roues arrière (HL, HR).

3. Installation de freins selon la revendication 1 ou 2, caractérisée en ce que le montage cylindre/piston à gradin (10) comporte au moins un ressort de rappel (19) pour le piston à gradin (16) ainsi qu'un réservoir d'alimentation en liquide de frein (24) pour le ou les circuits de freins de roues arrière (22).

4. Installation de freins selon la revendication 2 ou 3, caractérisée par deux montages cylindre/piston à gradin (10), un premier montage cylindre/piston à gradin (10a) étant relié à la roue arrière gauche (HL) par la troisième chambre de cylindre et une conduite de frein (22a) et la première chambre de cylindre est reliée à la conduite de frein (20a) pour la roue avant gauche (VL) et en ce que la seconde chambre de cylindre est reliée à la conduite de frein (21a) de la roue avant droite (VR) et un second montage cylindre/piston à gradin (10b) est relié par la troisième chambre de cylindre et par une conduite de frein (22b) à la roue arrière droite (HR) et en ce que la première chambre de cylindre est reliée à la conduite de frein (21b) de la roue avant droite (VR) et la seconde chambre de cylindre est reliée à la conduite de frein (20b) pour la roue avant gauche (VL).

5. Installation de freins selon la revendication 4, caractérisée en ce que les deux montages cylindre/piston à gradin (10a, 10b) sont réunis dans un ensemble.

6. Installation de freins selon l'une des revendications 1 à 5, caractérisée en ce que la première surface frontale de piston ($A_1$), la plus petite, est égale à la surface active de piston ($A_2$) formée par le gradin.

7. Installation de freins selon l'une des revendications 4 à 6, caractérisée en ce que les surfaces de piston ($A_{11}$, $A_{12}$, $A_g$ et $A_{21}$, $A_{22}$, $A_g$) correspondantes de chacun des deux montages cylindre/piston à gradin (10a, 10b) sont égales.

8. Installation de freins selon l'une des revendications 1 à 7, caractérisée par des réducteurs de pression de frein (23 ; 25, 26) montés dans la ou les conduites de freins de roues arrière (22).

FIG.1

FIG. 2

FIG. 3